# FASCICULE DE BREVET EUROPEEN

(11) **EP 2 923 939 B1**
(45) Date de publication et mention de la délivrance du brevet: **01.02.2017**
(21) Numéro de dépôt: 15161293.4
(22) Date de dépôt: 27.03.2015
(51) Int. Cl.: B62M 1/16, B62K 5/02, B62K 5/05

(54) **VEHICULE A PROPULSION MUSCULAIRE**
FAHRZEUG MIT MUSKELANTRIEB
MUSCLE-POWERED VEHICLE

(30) Priorité: 27.03.2014 FR 1452619
(43) Date de publication de la demande: 30.09.2015
(73) Titulaire: Resurgence, 54400 Longwy (FR)
(72) Inventeur: Leroy, Jean-Louis, 54400 LONGWY (FR)
(74) Mandataire: Novagraaf Technologies

(56) Documents cités:
- EP-A2- 0 069 932
- WO-A1-03/016126
- WO-A1-2013/072850
- FR-A1- 2 677 944
- GB-A- 2 481 274
- US-A1- 2004 188 977
- US-B1- 6 378 882

## Description

### 1. Domaine de l'invention

L'invention concerne le domaine des véhicules à propulsion musculaire. En particulier, elle vise les véhicules qui permettent d'utiliser le mouvement du rameur dans le cadre d'une pratique sportive et/ou de la rééducation pour les personnes handicapées.

### 2. Art antérieur

Il existe divers véhicules à propulsion qui utilisent le mouvement du rameur pour se déplacer et/ou pratiquer un exercice physique. Le véhicule comprend un châssis comportant deux rails s'étendant suivant une direction longitudinale, le châssis étant monté sur deux roues directrices avant et au moins une roue motrice arrière ; des moyens de direction comprenant un montant de direction pivotant pour diriger les roues directrices et apte à être animé d'un mouvement de va-et-vient de rameur ; et des moyens d'entraînement de la roue motrice.

Un tel véhicule est connu du document US 4 639 007.

US 4 639 007 décrit un dispositif ayant les caractéristiques du préambule de la revendication 1.

L'un des problèmes lié à ce véhicule à propulsion réside dans le fait qu'il utilise plusieurs mouvements complexes, d'une part, pour diriger le véhicule et d'autre part, pour propulser le véhicule. Par ailleurs, pour opérer ces différents mouvements, des pièces diverses et variées sont nécessaires ce qui implique une fabrication coûteuse et un agencement des pièces entre elles compliqué.

### 3. Objectifs de l'invention

L'invention a notamment pour objectif de pallier tout ou partie des inconvénients de l'art antérieur.

Un objectif de l'invention est de fournir un véhicule à propulsion dont la gestion des mouvements de direction et de propulsion est simplifiée tout en réduisant les délais et les coûts de fabrication.

### 4. Résumé de l'invention

Ces objectifs sont atteints grâce à un véhicule à propulsion comprenant un châssis comportant deux rails s'étendant suivant une direction longitudinale, le châssis étant monté sur deux roues directrices avant et au moins une roue motrice arrière ; des moyens de direction comprenant un montant de direction pivotant pour diriger les roues directrices et apte à être animé d'un mouvement de va-et-vient de rameur ; et des moyens d'entrainement de la roue motrice, les moyens de direction comportant une barre de transmission couplée au montant de direction et montée en pivotement autour d'un axe selon la direction longitudinale, la barre de transmission étant entrainée en rotation par le pivotement du montant de direction autour de l'axe longitudinal; le véhicule comprenant en outre un chariot d'entrainement monté coulissant sur les rails suivant la direction longitudinale, et lié au montant de direction, le montant de direction étant apte à entrainer le chariot d'entraînement selon la direction longitudinale, le chariot d'entrainement étant relié aux moyens d'entraînement de sorte que le véhicule est propulsé lors du mouvement de va-et-vient du montant de direction.

Cette solution permet de résoudre les problèmes précités. En particulier, la barre de transmission et le chariot d'entraînement permettent de simplifier et de combiner les mouvements liés à la direction et à la propulsion du véhicule. Ce dernier permet également de solliciter les jambes et les bras d'un utilisateur de manière synchronisée pour un renforcement optimal musculaire.

Selon une caractéristique très avantageuse de l'invention, le montant de direction est couplé à une de ses extrémités à une plateforme munie de moyens de guidage (25) monté coulissant sur la barre de transmission grâce à des de moyens de guidage.

Selon une caractéristique de l'invention, le chariot d'entraînement et la plateforme comprennent des moyens de liaison pour entrainer le chariot d'entraînement en coulissement suivant la direction longitudinale et déplacer la plateforme par rapport au chariot d'entrainement.

De préférence, la barre de transmission est installée entre les deux rails.

Selon un mode de réalisation, la barre de transmission présente une section quadrangulaire et une première et une deuxième surface d'appui opposées.

Selon une caractéristique de l'invention, les moyens de guidage comportent au moins deux galets de guidage qui sont chacun monté de part et d'autre de la barre de transmission, chaque galet de guidage ayant une piste de roulement en contact respectivement avec la première surface d'appui et la deuxième surface d'appui de la barre de transmission, les galets de guidage tournant en sens opposé.

Selon encore une caractéristique de l'invention, les moyens d'entrainement comportent une première chaîne de transmission reliée au chariot d'entraînement et à un premier pignon intermédiaire. Cette configuration permet la démontabilité du véhicule pour faciliter le transport.

Selon encore une caractéristique de l'invention, les moyens d'entraînement comportent une deuxième chaîne de transmission reliée à un deuxième pignon intermédiaire et à un pignon d'entraînement de la roue motrice arrière, le deuxième pignon intermédiaire est solidaire du premier pignon intermédiaire. Dans le même but, cette configuration permet la démontabilité du véhicule pour faciliter le transport. Cela permet également de décomplexifier le montage pour un gain de temps et de simplifier les mouvements.

Selon une autre caractéristique avantageuse de l'invention, le moyen d'entrainement comprend un pignon situé à l'avant du véhicule servant au maintien et au renvoi à la première chaine de transmission.

Afin de régler également la tension de la première chaîne de transmission, le chariot d'entrainement peut comprendre en outre un galet intermédiaire de soutien de la première chaine de transmission.

Selon une caractéristique avantageuse, le véhicule comprend des moyens de rappel du chariot d'entrainement vers l'avant du véhicule fixés entre le châssis et le chariot d'entrainement. Ces moyens de rappel permettent de ramener le chariot d'entrainement vers l'avant du véhicule correspondant à sa position initiale.

Selon une autre caractéristique de l'invention, le véhicule peut comprendre deux repose-pieds fixés sur le châssis de sorte que l'utilisateur immobilise ses chaussures ou pieds sur les repose-pieds et applique une force avec ses pieds et ses jambes pour propulser le véhicule.

Selon encore une autre caractéristique de l'invention, le véhicule peut comprendre un siège mobile en translation par rapport aux rails suivant la direction longitudinale du véhicule pour que l'utilisateur puisse s'assoir.

De préférence, le siège est monté sur un chariot coulissant librement le long des rails de sorte que l'utilisateur puisse adapter la position du siège sur les rails en fonction de sa taille et également de propulser le véhicule.

### 5. Liste des figures

D'autres caractéristiques et avantages innovants ressortiront de la description ci-après, fournie à titre indicatif et nullement limitatif, en référence aux dessins annexés, dans lesquels :
- La figure 1 est une vue en perspective d'un véhicule à propulsion selon l'invention;
- La figure 2 est une vue partielle de face et plus en détail d'un véhicule à propulsion selon l'invention ;
- La figure 3 est une vue de face d'un véhicule à propulsion selon l'invention;
- La figures 4 est une vue de dessus d'un véhicule à propulsion selon l'invention ;
- Les figures 5, 6 et 7 illustrent plus en détail sur des vues partielles de dessus, de côté et arrière d'un moyen de direction et d'un chariot d'entraînement d'un véhicule à propulsion selon l'invention ;
- La figure 8 est une vue de dessous d'un véhicule à propulsion selon l'invention ;
- La figures 9 et 10 représentent des vues de détail et de dessous d'un chariot d'entrainement ; et,
- Les figures 11 et 12 sont des représentations schématiques simplifiées du principe de fonctionnement et agencement des différentes parties d'un véhicule à propulsion selon l'invention.

### 6. Description détaillée

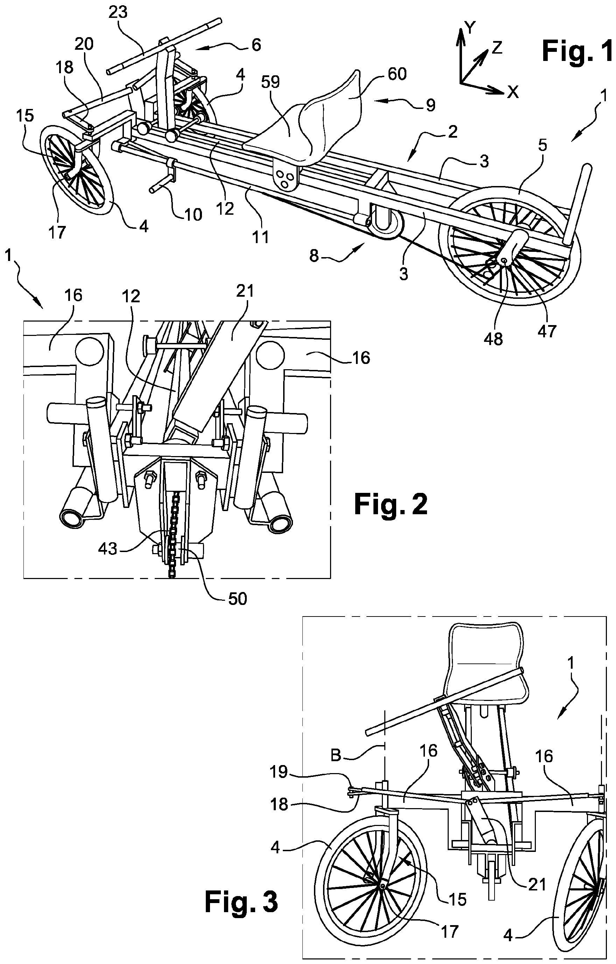

En référence à la figure 1, est représenté le véhicule 1 à propulsion musculaire selon l'invention tel qu'un tricycle. Pour faciliter la compréhension de l'invention, nous considérons que le véhicule 1 comprend un châssis 2 comportant deux rails 3 qui s'étendent suivant une direction longitudinale X horizontale. Est également représentée la direction verticale Y qui est perpendiculaire à la direction longitudinale X et à une direction transversale Z de sorte que ces trois directions X, Y, Z forment un repère orthogonal direct tel qu'illustré sur la figure 1. Les termes « inférieur », « supérieur », « haut » et « bas » sont définis par rapport à la direction verticale Y, le terme « latéral » est défini par rapport à la direction transversale Z et les termes « avant » et « arrière » sont définis par rapport à la direction longitudinale X.

Le châssis 2 est monté sur deux roues directrices 4 avant et une roue motrice 5 arrière. Le châssis 2 peut être réalisé de préférence en acier ou en aluminium ou tout autre matériau léger tel que synthétique ou métallique. Le véhicule 1 comprend également des moyens de direction 6 comprenant un montant de direction 7 pivotant pour diriger les roues directrices 4 et apte à être animé d'un mouvement de va-et-vient de rameur et des moyens d'entraînement 8 de la roue motrice 5. Les roues directrices 4 avant sont couplées au moyen de direction 6. Le véhicule 1 comprend un siège 9 mobile en translation par rapport aux rails 3 suivant la direction longitudinale X. Le siège 9 se déplace sur les rails 3 dans les deux sens, à savoir, en avant et en arrière. Deux repose-pieds 10 sont fixés sur le châssis 13 de part et d'autre des rails 3. Plus précisément, chaque repose-pied 10 est solidaire d'un profilé 11 qui est fixé à l'un des rails 3. Les profilés 11 s'étendent chacun suivant la direction longitudinale X. Les repose-pieds 10 peuvent, bien entendu, être fixés directement sur les rails 3. La position des repose-pieds peut être réglable grâce à des moyens de fixation amovible (vis, boulon ou goujon).

Comme on peut le voir plus précisément sur la figure 2, les moyens de direction 6 comportent en outre une barre de transmission 12 couplée au montant de direction 7. Cette barre de transmission 12 est allongée suivant la direction longitudinale X et est installée entre les rails 3 du châssis 2. La barre de transmission 12 présente ici une section quadrangulaire et une première et une deuxième surface d'appui 13, 14 opposées selon la direction Y. La barre de transmission 12 est montée en pivotement autour d'un axe A selon la direction longitudinale X. Celle-ci est entrainée en rotation par le pivotement du montant de direction 7 autour de l'axe A de sorte à diriger les roues directrices 4. Pour cela, chaque roue directrice 4 avant est montée sur une fourche 15 reliée au châssis 2 (figure 3). Chaque fourche 15 est montée pivotante autour d'un axe B parallèle à la direction Y par rapport à un arceau 16 en faisant partie du châssis 2. L'arceau 16 présente ici une forme en L. Les fourches 15 portent à leur extrémité inférieure 17 l'axe d'un moyeu d'une roue directrice 4. L'extrémité 17' libre des fourches 15 comprend une manivelle 18 s'étendant transversalement à l'axe B de la fourche 15. Chaque manivelle 18 est fixée à une des extrémités 19, 19' d'une tringle 20 et l'autre extrémité des tringles 20 est connectée à un bras 21. Ici, il s'agit d'un unique bras 21. Ce dernier est monté de manière fixe sur la barre de transmission 12 de sorte que lorsque la barre de transmission 12 est entrainée en rotation dans une direction (vers la gauche ou la droite), le bras 21 pivote également dans cette même direction ce qui entraine, concomitamment, la rotation des roues directrices 4 via les fourches 15. Le bras 21 est fixé à l'extrémité avant de la barre de transmission 12 par tout moyen de fixation tel que vis, soudage.

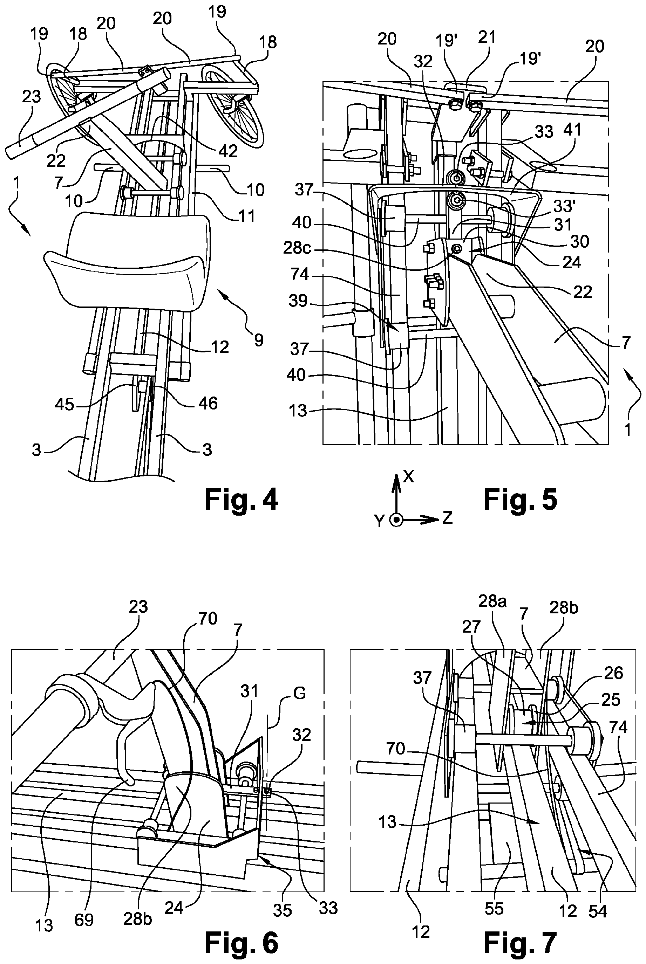

Sur la figure 4, le montant de direction 7 s'étend sensiblement suivant la direction Y. Celui-ci comprend une première et une deuxième extrémité 22, 22' opposées. Un guidon 23 est solidarisé à la première extrémité 22. Le montant de direction 7 est couplé à sa deuxième extrémité 22' à une plateforme 24 comprenant un corps conformé en H ou en U renversé. Le corps de la plateforme en H ou en U présente deux parois 28a, 28b reliées entre elles par une paroi transversale 28c de sorte à former un passage 29 pour la barre de transmission 12. La plateforme 24 est montée coulissant sur la barre de transmission 12 grâce à des moyens de guidage 25. Les moyens de guidage 25 comportent des galets de guidage 26 tournant autour d'un axe C, perpendiculaires aux parois 28a, 28b, et ont une piste 27 de roulement. De manière avantageuse, les galets de guidage 26 sont installés entre les parois 28a, 28b. Les galets de guidage 26 sont montés chacun de part et d'autre de la barre de transmission 12. La piste de roulement 27 de chaque galet de guidage 26 est en contact respectivement avec la première 13 et la deuxième 14 surface d'appui de la barre de transmission 12. Les galets de guidage 26 tournent en sens opposé. Avantageusement, mais de manière facultative, deux galets de guidage 26 sont en contact avec la première surface d'appui 13 et un galet de guidage 26 est en contact avec la deuxième surface d'appui 14. Les galets de guidage 26 situés en partie supérieure de la plateforme 24 sont espacés l'un de l'autre. Le centre du galet de guidage 26 situé en partie inférieure de la plateforme 24 est décentré par rapport aux centres des galets de guidage supérieurs.

Sur les figures 5, 6, 7 et 8 est illustré, plus précisément, un chariot d'entraînement 35 monté coulissant sur les rails 3 suivant la direction longitudinale X. Les rails 3 présentent une section rectangulaire avec une première et une seconde surface de contact 74, 75 opposées par rapport à la direction Y verticale. Le chariot d'entrainement 35 comprend deux panneaux 36 latéraux situés l'un en regard de l'autre et qui sont reliés entre eux via des arbres 40. Ces panneaux 36 sont de section rectangulaire. Ici, quatre arbres 40 sont fixés vers chaque coin des panneaux 36 et relient les panneaux 36 entre eux. Des galets de guidage 37 présentant chacun une piste de roulement 39, sont montés rotatifs selon un axe D parallèle à la direction Z vers chaque extrémité des arbres 40. Les galets de guidage 37 sont disposés en regard de chaque surface interne 38 des panneaux 36. Deux galets de guidages 37, situés en partie supérieure de chaque panneau 36, ont leur piste de roulement 39 en contact avec la première surface de contact 74 des rails 3 et deux galets de guidage 37, situés en partie inférieure de chaque panneau 36, ont leur piste de roulement 39 en contact avec la seconde surface de contact 75 des rails 3. Le chariot d'entraînement 35 comprend encore une première plaque 41 frontale fixée en partie supérieure des deux panneaux 36 latéraux. Cette première plaque 41 frontale est orientée vers l'avant du véhicule 1. Dans cette disposition, la première plaque 41 frontale chevauche la partie supérieure des rails 3. La plaque 41 présente un côté 42 découpé en arc de cercle et orienté vers les rails 3. De manière alternative, la première plaque 41 se présente sous la forme d'un arc de cercle.

Selon une caractéristique de l'invention, le montant de direction 7 est apte à entrainer le chariot d'entraînement 35 selon la direction longitudinale X. Le chariot d'entraînement 35 et la plateforme 24 supportant le montant de direction 7 comprennent des moyens de liaison permettant au chariot d'entraînement 35 de coulisser sur les rails 3 lors du mouvement de de va-et-vient du montant de direction 7. Pour cela, sur la figure 5, la paroi 28c comprend vers une de ses extrémités 30 une languette 31 qui est allongée suivant la direction longitudinale X. Cette languette 31 est fixée par tout moyen de fixation adéquat sur la paroi 28c. La languette 31 comprend vers son extrémité libre 32 deux disques de roulement 33,33' montés rotatifs par rapport à la languette 31 et qui sont installés à une distance l'un de l'autre. Les disques de roulement 33,33' sont montés sur le côté supérieur de la languette 31. Les disques de roulement 33, 33' tournent chacun librement autour d'un axe de rotation G suivant la direction Y. La languette 31 présente une forme sensiblement rectangulaire et est orientée vers l'avant du véhicule 1. Une portion du côté 42 en arc de cercle de la première plaque 41 frontale du chariot d'entraînement 35 est prise en sandwich entre les deux disques de roulement 33, 33'. De la sorte lorsque le montant de direction 7 coulisse sur la barre de transmission 12, celui-ci entraine le chariot d'entraînement 35 en translation, via la plateforme 24 et la languette 31, suivant la direction longitudinale du véhicule 1. Lorsque le montant de direction 7 pivote autour de l'axe A, la languette se déplace para rapport à la première plaque 41. Les disques de roulement 33, 33' tournent en sens opposé sur la portion de côté 42 de la première plaque 41 sur laquelle ceux-ci en contact.

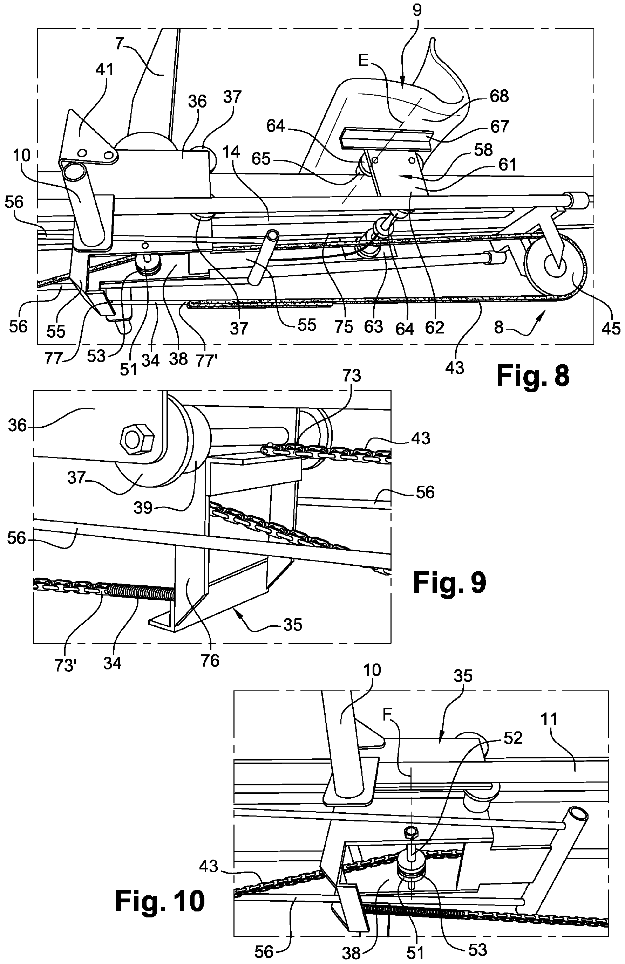

Nous allons maintenant décrire les moyens d'entraînement servant également à propulser le véhicule 1 tel qu'illustré sur les figures 8, 9, 10, 11 et 12.

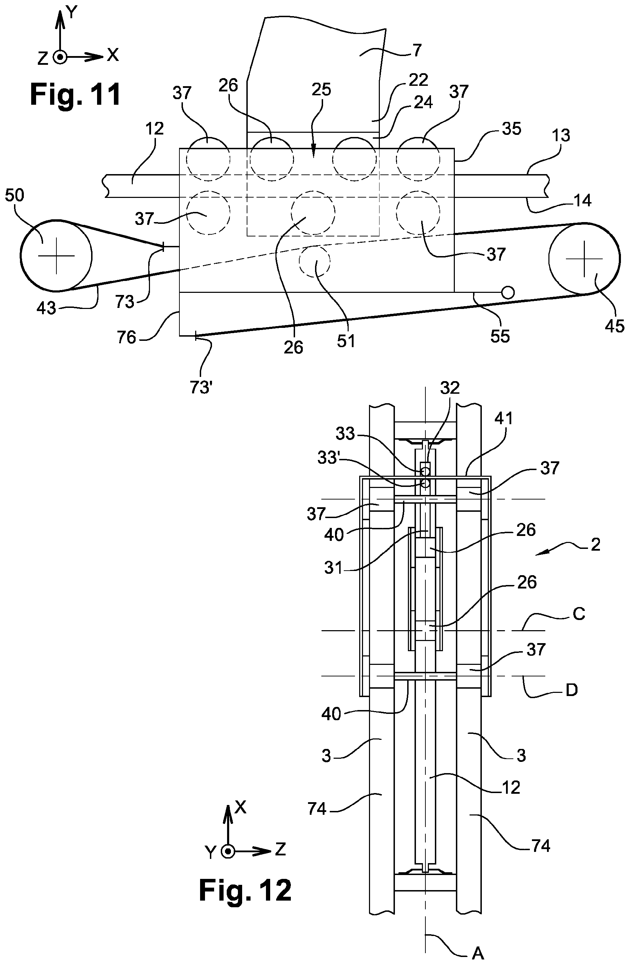

Le chariot d'entraînement 35 est également relié aux moyens d'entraînement 8 de sorte que le véhicule 1 est propulsé lors du mouvement de va-et-vient du montant de direction 7. Les moyens d'entraînement 8 comportent une première chaîne de transmission 43 et une deuxième chaine de transmission 44 pour l'entrainement et la propulsion du véhicule 1. Un premier et un deuxième pignon intermédiaires 45, 46 sont montés de manière rotative, suivant la direction Z, sur le châssis 2 et sont localisés entre la roue motrice 5 arrière et les roues directrices 4 avant. Le premier et le deuxième pignon intermédiaire 45, 46 sont montés sur un flasque unique comprenant un axe de rotation commun. Par ailleurs, des bras 47 solidaires du châssis 2 portent à leur extrémité 48 libre l'axe d'un moyeu de la roue motrice 5 sur lequel un pignon d'entrainement 49 de la roue motrice 4 est solidaire. La première chaine de transmission 43 est reliée au chariot d'entrainement 35 et engrène sur le premier pignon intermédiaire 45. La deuxième chaîne de transmission 44 engrène sur le deuxième pignon intermédiaire 46 et le pignon d'entrainement 49 de la roue motrice 5. Le moyen d'entrainement 8 comprend encore un pignon 50 monté rotatif par rapport au châssis 2 et situé à l'avant du véhicule, entre les deux roues directrices 4. Ce pignon 50 tourne librement autour d'un axe perpendiculaire à la direction longitudinale X et fixe par rapport au châssis 2. Le pignon 50 sert de renvoi à la première chaine de transmission 43. Un galet intermédiaire de soutien 51 de la première chaine de transmission 43 est porté par le chariot d'entrainement 35. Comme illustré plus précisément sur la figure 10, la partie inférieure des panneaux 36 latéraux du chariot d'entrainement 35 porte un arbre 52 sur lequel est monté en rotation le galet intermédiaire de soutien 51 suivant un axe F, perpendiculaire à la direction longitudinale du véhicule 1. Le galet de soutien 51 présente sur sa surface externe une gorge 53 dans laquelle la première chaine de transmission 43 est guidée. Dans une variante, deux galets intermédiaires de soutien peuvent être montés adjacents sur l'arbre 52 de sorte que la première chaîne de transmission 43 soit guidée entre les deux galets intermédiaires. Sur la figure 11, une extrémité 73 de la première chaîne de transmission 43 est attachée en partie supérieure d'un support 76 du chariot de transmission 35 et l'autre extrémité 73' est attachée en partie inférieure du support. La première chaîne de transmission 43 est renvoyée par le pignon de renvoi 50 vers le premier pignon intermédiaire 45 en passant par le pignon intermédiaire de soutien 51 qui renvoie la première chaine de transmission 43 vers le support 76 du chariot d'entraînement 35. Des moyens de réglage de la tension de la première chaîne de transmission 43 sont également prévus sur le chariot d'entraînement 35. Ces moyens de réglage sont formés par un ressort 34 (figure 8) dont une extrémité 77 est fixée au support 76 et l'autre extrémité 77' est fixée à l'extrémité 73' de la première chaine de transmission 43. Un autre moyen de réglage de ce type peut être disposé sur le pignon 50 pour améliorer la souplesse de la première chaine de transmission 43.

Sur la figure 8, le véhicule 1 comprend des moyens de rappel 54 du chariot d'entrainement 35 fixés entre le châssis 2 et le chariot d'entraînement 35. Le chariot d'entraînement 35 comprend, en partie inférieure, une seconde plaque 55 fixée aux panneaux 36 latéraux sur laquelle sont solidarisés les moyens de rappel 54 de part et d'autre de cette plaque 55. Cette dernière est orientée vers l'arrière du véhicule 1. Les moyens de rappel 54 sont formés par des câbles élastiques (sandow) ou moyen équivalent. Ici, il y a deux câbles élastiques 56. Chaque câble élastique 56 est attaché à une de ses extrémité 57, 57' à la seconde plaque 55 et à deux points situés à l'avant du châssis 2 du véhicule 1 à l'autre de ses extrémités 57, 57'.

Le véhicule 1 peut comporter, de manière avantageuse mais non limitativement, un volant d'inertie permettant de lisser une vitesse des moyens d'entraînement du fait de la rupture périodique d'entrainement. En particulier, le volant d'inertie peut être couplé sur l'arbre d'axe de rotation commun du premier et du deuxième pignons intermédiaires 45, 46. Alternativement, le volant d'inertie pourrait être couplé au deuxième pignon d'entrainement 46 agissant sur la deuxième chaîne de transmission 44 entrainant la roue motrice 5.

Egalement sur la figure 8, le siège 9 est monté sur un chariot 58 coulissant librement le long des rails 3. Le siège 9 comprend une assise 59 et un dossier 60 formé d'un seul tenant. Le siège 9 est réalisé dans un matériau en plastique. Le chariot 58 est formé au moyen d'un plateau 61 comprenant une surface interne 62 et surface externe 63. Sur la surface interne 62 sont montés des galets de guidage 64 présentant un axe E de rotation parallèle à la direction Z et une piste de roulement 65. Ces galets de guidage 64 sont destinés à être en contact avec la première et la deuxième surface 74, 75 de contact des rails 3. De manière avantageuse, mais facultativement, deux galets de guidage 64 espacés l'un de l'autre ont leur piste de roulement 65 en contact avec la première surface de contact 74 et un galet de guidage 64 a une piste de roulement 65 en contact avec la deuxième 75 surface de contact. Le plateau 61 est fixé au siège 9 au moyen d'un profilé 67 solidarisé à la surface externe 68 de l'assise 59. Dans ce mode de réalisation, deux profilés 67 sont montés de chaque côté de l'assise 59 et sont reliés chacun à un plateau 61 portant les galets de guidage 64. Alternativement, un profilé permet de relier les plateaux entre eux et de les fixer au siège 9.

Le véhicule est propulsé lors des tractions exercées sur les première et deuxième chaines de transmission 43, 44 via le montant de direction 7. Lorsque l'utilisateur tire le montant de direction 7 via le guidon 23 avec les bras, vers lui (vers l'arrière du véhicule 1) en prenant appui sur les repose-pieds 10, la plateforme 24 coulisse sur la barre de transmission 12 et entraine simultanément le chariot d'entraînement 35 en coulissement sur les rails 3 via la connexion disque de roulement 33, 33'- plaque frontale 41. En même temps, le mouvement du chariot d'entraînement 35 est transmis à la première chaîne de transmission 43 qui entraine en rotation le premier pignon intermédiaire 45. Ce dernier entraine en rotation le deuxième pignon intermédiaire 46 qui agit alors sur la deuxième chaîne de transmission 44 transmettant une force motrice sur le pignon d'entraînement 49 de la roue motrice 5 de sorte à propulser le véhicule 1. Lorsque l'utilisateur veut changer la direction du véhicule 1, par exemple vers la gauche, pendant le mouvement de va-et-vient de rameur, l'utilisateur bascule le montant de direction 7 sur la gauche ce qui entraine en rotation la barre de transmission 12 dans la même direction. Pendant ce mouvement de pivotement du montant de direction 7, la languette 31 pivote en même temps sur la gauche ce qui génère la rotation des disques de roulement 33,33' en sens opposé et de part et d'autre de la portion de côté 42 de la plaque frontale 41 (voir figure 4). Le bras 21 solidaire de la barre de transmission 12 pivote simultanément vers la gauche, et de façon concomitante, la fourche 15 tourne vers la gauche grâce à l'une des tringles 20 qui lie le bras 21 et la manivelle 18 portée par la fourche 15. Le même mouvement s'opère pour tourner sur la droite.

Le véhicule 1 peut être utilisé pour se déplacer tout en effectuant un exercice physique de renforcement musculaire ou sur place en utilisant des moyens d'immobilisation du véhicule 1.

Le véhicule 1 comprend, en outre, des moyens de freinage qui sont associés à la roue motrice 5. Ces moyens de freinage 69 comprennent un frein à disque 72 monté sur la roue motrice 4 et actionnable via des câbles 70 par une manette de frein 71 qui est disposée sur le guidon 23 (voir figures 4 et 6).

Le véhicule peut comporter, par ailleurs, une assistance électrique pour faciliter la propulsion de celui-ci. Cette assistance électrique peut être un ou plusieurs moteurs électriques. Ce ou ces moteurs peuvent être alimenté(s) par batterie ou tout autre moyen similaire utilisant de l'énergie solaire.

L'invention est décrite dans ce qui précède à titre d'exemple. Il est entendu que la personne de l'art est à même de réaliser différentes variantes de réalisation de l'invention, en associant par exemple les différentes caractéristiques ci-dessus prises seules ou en combinaison, sans pour autant sortir du cadre de l'invention.

## Revendications

1. Véhicule (1) à propulsion comprenant :
- un châssis (2) comportant deux rails (3) s'étendant suivant une direction longitudinale (X), le châssis (2) étant monté sur deux roues directrices (4) avant et au moins une roue motrice (5) arrière ;
- des moyens de direction (6) comprenant un montant de direction (7) pivotant pour diriger les roues directrices (4) et apte à être animé d'un mouvement de va-et-vient de rameur ; et,
- des moyens d'entrainement (8) de la roue motrice, **caractérisé en ce que**
les moyens de direction (6) comportent une barre de transmission (12) couplée au montant de direction (7) et montée en pivotement autour d'un axe (A) selon la direction longitudinale (X), la barre de transmission (12) étant entrainée en rotation par le pivotement du montant de direction (7) autour de l'axe longitudinal (X) ;
et **en ce que** le véhicule comprend un chariot d'entraînement (35) monté coulissant sur les rails (3) suivant la direction longitudinale, et lié au montant de direction (7), le montant de direction (7) étant apte à entrainer le chariot d'entraînement (35) selon la direction longitudinale (X), le chariot d'entraînement (35) étant relié aux moyens d'entraînement (8) de sorte que le véhicule (1) est propulsé lors du mouvement de va-et-vient du montant de direction (7).

2. Véhicule (1) selon la revendication 1, **caractérisé en ce que** le montant de direction (7) est couplé à une de ses extrémités à une plateforme (24) munie de moyens de guidage (25) montée coulissant sur la barre de transmission (12).

3. Véhicule (1) selon la revendication 2, **caractérisé en ce que** le chariot d'entrainement et la plateforme comprennent des moyens de liaison pour entrainer le chariot d'entrainement (35) en coulissement suivant la direction longitudinale et déplacer la plateforme par rapport au chariot d'entrainement (35).

4. Véhicule (1) selon la revendication 1 ou 2, **caractérisé en ce que** la barre de transmission (12) est installée entre les deux rails (3).

5. Véhicule (1) selon la revendication 4, **caractérisé en ce que** la barre de transmission (12) présente une section quadrangulaire et une première et une seconde surface d'appui (13, 14) opposées.

6. Véhicule (1) selon la revendication 5, **caractérisé en ce que** les moyens de guidage (25) comportent au moins deux galets de guidage (26) qui sont chacun monté de part et d'autre de la barre de transmission (12), chaque galet de guidage (26) ayant une piste de roulement (27) en contact respectivement avec la première et la deuxième surface d'appui (13, 14) de la barre de transmission (12), les galets de guidage (26) tournant en sens opposée.

7. Véhicule (1) selon la revendication 1, **caractérisé en ce que** les moyens d'entrainement (8) comportent une première chaîne de transmission (43) reliée au chariot d'entrainement (35) et à un premier pignon intermédiaire (45).

8. Véhicule (1) selon la revendication 7, **caractérisé en ce que** les moyens d'entraînement comportent une deuxième chaîne de transmission (44) reliée à un deuxième pignon intermédiaire (46) et à un pignon d'entraînement (49) de la roue motrice (5) arrière.

9. Véhicule (1) selon la revendication 7, **caractérisé en ce que** le moyen d'entrainement comprend un pignon (50) situé à l'avant du véhicule (1) servant de renvoi à la première chaine de transmission (43).

10. Véhicule (1) selon les revendications 1 à 9, **caractérisé en ce que** le chariot d'entraînement (35) comprend en outre un galet intermédiaire de soutien (51) de la première chaine de transmission (43).

11. Véhicule (1) selon l'une quelconque des revendications 1 à 10, **caractérisé en ce que** ce qu'il comprend des moyens de rappel (54) du chariot d'entraînement (35) vers l'avant du véhicule (1) fixés entre le châssis (2) et le chariot d'entraînement (35).

12. Véhicule (1) selon l'une quelconque des revendications 1 à 11, **caractérisé en ce qu'**il comprend deux repose-pieds (10) fixés sur le châssis (2).

13. Véhicule (1) selon l'une quelconque des revendications 1 à 12, **caractérisé en ce qu'**il comprend un siège (9) mobile en translation par rapport aux rails (3) suivant la direction longitudinale (X).

14. Véhicule (1) selon la revendication 13, **caractérisé en ce que** le siège (9) est monté sur un chariot coulissant librement le long des rails (3).

## Patentansprüche

1. Fahrzeug (1) mit Antrieb, umfassend:
- eine Rahmen (2), der zwei Schienen (3) aufweist, die sich gemäß einer Längsrichtung (X) erstrecken, wobei der Rahmen (2) auf zwei vorne gelenkten Rädern (4) und mindestens einem hinten gelenkten Antriebsrad (5) montiert ist,
- Lenkmittel (6), umfassend eine schwenkende Lenksäule (7), um die gelenkten Räder (4) zu lenken und die imstande ist, mit einer rudernden Hin- und Herbewegung bewegt zu werden, und
- Antriebsmittel (8) des Antriebsrads,
**dadurch gekennzeichnet, dass**
die Lenkmittel (6) einen mit der Lenksäule (7) gekoppelten und schwenkend um eine Achse (A) gemäß der Längsrichtung (X) montierten Übertragungsstab (12) aufweisen, wobei der Übertragungsstab (12) durch das Schwenken der Lenksäule (7) um die Längsachse (X) rotierend angetrieben wird,
und dass das Fahrzeug einen Antriebsschlitten (35) umfasst, der gleitend auf den Schienen (3) gemäß der Längsrichtung montiert und mit der Lenksäule (7) verbunden ist, wobei die Lenksäule (7) imstande ist, den Antriebsschlitten (35) gemäß der Längsrichtung (X) anzutreiben, wobei der Antriebsschlitten (35) mit Antriebsmitteln (8) derart verbunden ist, dass das Fahrzeug (1) bei der Hin- und Herbewegung Lenksäule (7) vorangetrieben wird.

2. Fahrzeug (1) nach Anspruch 1, **dadurch gekennzeichnet, dass** die Lenksäule (7) an einem ihrer Enden mit einer Plattform (24) gekoppelt ist, die mit Führungsmitteln (25) ausgestattet ist, die gleitend auf dem Übertragungsstab (12) montiert ist.

3. Fahrzeug (1) nach Anspruch 2, **dadurch gekennzeichnet, dass** der Antriebsschlitten und die Plattform Verbindungsmittel umfassen, um den Antriebsschlitten (35) gleitend gemäß der Längsrichtung anzutreiben und die Plattform in Bezug zum Antriebsschlitten (35) zu verlagern.

4. Fahrzeug (1) nach Anspruch 1 oder 2, **dadurch gekennzeichnet, dass** der Übertragungsstab (12) zwischen den zwei Schienen (3) eingebaut ist.

5. Fahrzeug (1) nach Anspruch 4, **dadurch gekennzeichnet, dass** der Übertragungsstab (12) einen viereckigen Querschnitt und eine erste und eine zweite gegenüberliegende Abstützfläche (13, 14) aufweist.

6. Fahrzeug (1) nach Anspruch 5, **dadurch gekennzeichnet, dass** die Führungsmittel (25) mindestens zwei Führungsrollen (26) aufweisen, die jeweils auf der einen und der anderen Seite des Übertragungsstabs (12) montiert sind, wobei jede Führungsrolle (26) einen Rollweg (27) im Kontakt jeweils mit der ersten und der zweiten Abstützfläche (13, 14) des Übertragungsstabs (12) hat, wobei die Führungsrollen (26) in entgegengesetzte Richtung drehen.

7. Fahrzeug (1) nach Anspruch 1, **dadurch gekennzeichnet, dass** die Antriebsmittel (8) eine erste Übertragungskette (43) aufweisen, die mit dem Antriebsschlitten (35) und mit einem ersten Zwischenzahnrad (45) verbunden ist.

8. Fahrzeug (1) nach Anspruch 7, **dadurch gekennzeichnet, dass** die Antriebsmittel eine zweite Übertragungskette (44) aufweisen, die mit einem zweiten Zwischenzahnrad (46) und mit einem Antriebszahnrad (49) des hinteren Antriebsrads (5) verbunden ist.

9. Fahrzeug (1) nach Anspruch 7, **dadurch gekennzeichnet, dass** das Antriebsmittel ein Zahnrad (50) umfasst, das sich vorne auf dem Fahrzeug (1) befindet und für die erste Übertragungskette (43) als Getriebe dient.

10. Fahrzeug (1) nach den Ansprüchen 1 bis 9, **dadurch gekennzeichnet, dass** der Antriebsschlitten (35) ferner eine zwischengestellte Stützrolle (51) der ersten Übertragungskette (43) umfasst.

11. Fahrzeug (1) nach einem der Ansprüche 1 bis 10, **dadurch gekennzeichnet, dass** es Rückstellmittel (54) des Antriebsschlittens (35) nach vorn auf dem Fahrzeug (1) umfasst, die zwischen dem Rahmen (2) und dem Antriebsschlitten (35) befestigt sind.

12. Fahrzeug (1) nach einem der Ansprüche 1 bis 11, **dadurch gekennzeichnet, dass** es zwei Fußstützen (10) umfasst, die auf dem Rahmen (2) befestigt sind.

13. Fahrzeug (1) nach einem der Ansprüche 1 bis 12, **dadurch gekennzeichnet, dass** es einen in Bezug zu den Schienen (3) gemäß der Längsrichtung (X) verschiebend beweglichen Sitz (9) umfasst.

14. Fahrzeug (1) nach Anspruch 13, **dadurch gekennzeichnet, dass** der Sitz (9) auf einem frei entlang der Schienen (3) gleitenden Schlitten montiert ist.

## Claims

1. A propelled vehicle (1) comprising:
- a chassis (2) including two rails (3) extending in a longitudinal direction (X), the chassis (2) being mounted on two forward steering wheels (4) and at least one rear drive wheel (5);
- steering means (6) comprising a pivoting steering column (7) to direct the steering wheels (4) and capable of being driven with a back-and-forth rowing motion; and
- means for driving (8) the drive wheel,
**characterized in that**
the steering means (6) include a transmission bar (12) coupled to the steering column (7) and pivotably mounted around an axis (A) in the longitudinal direction (X), the transmission bar (12) being driven in rotation by the pivoting of the steering column (7) around the longitudinal axis (X);
and **in that** the vehicle comprises a driving carriage (35) slidably mounted on the rails (3) in the longitudinal direction, and connected to the steering column (7), the steering column (7) being capable of driving the driving carriage (35) in the longitudinal direction (X), the driving carriage (35) being connected to the drive means (8) so that the vehicle (1) is propelled during back-and-forth movement of the steering column (7).

2. The vehicle (1) according to claim 1, **characterized in that** the steering column (7) is coupled at one of its ends to a platform (24) provided with guiding means (25) slidably mounted on the transmission bar (12).

3. The vehicle (1) according to claim 2, **characterized in that** the driving carriage and the platform comprise connection means for driving the driving carriage (35) to slide in the longitudinal direction and displace the platform with respect to the driving carriage (35).

4. The vehicle (1) according to claim 1 or 2, **characterized in that** the transmission bar (12) is installed between the two rails (3).

5. The vehicle (1) according to claim 4, **characterized in that** the transmission bar (12) has a quadrangular section and a first and a second opposite bearing surfaces (13, 14).

6. The vehicle (1) according to claim 5, **characterized in that** the guiding means (25) include at least two guide rollers (26) which are each mounted on either side of the transmission bar (12), each guide roller (26) having a rolling track (27) in contact respectively with the first and the second bearing surface (13, 14) of the transmission bar (12), the guide rollers (26) turning in opposite directions.

7. The vehicle (1) according to claim 1, **characterized in that** the drive means (8) include a first transmission chain (43) connected to the driving carriage (35) and to a first intermediate gear (45).

8. The vehicle (1) according to claim 7, **characterized in that** the drive means include a second transmission chain (44) connected to a second intermediate gear (46) and to a drive gear (49) of the rear drive wheel (5).

9. The vehicle (1) according to claim 7, **characterized in that** the drive means include a gear (50) located at the front of the vehicle (1) serving as a transfer to the first transmission chain (43).

10. The vehicle (1) according to claims 1 to 9, **characterized in that** the driving carriage (35) further comprises an intermediate support roller (51) for the first transmission chain (43).

11. The vehicle (1) according to any one of claims 1 to 10, **characterized in that** it comprises return means (54) for the driving carriage (35) toward the front of the vehicle (1) attached between the chassis (2) and the driving carriage (35).

12. The vehicle (1) according to any one of claims 1 to 11, **characterized in that** it comprises two footrests (10) attached to the chassis (2).

13. The vehicle (1) according to any one of claims 1 to 12, **characterized in that** it comprises a seat (9) movable in translation with respect to the rails (3) in the longitudinal direction (X).

14. The vehicle (1) according to claim 13, **characterized in that** the seat (9) is mounted on a carriage freely slidable along the rails (3).
